# EUROPÄISCHE PATENTANMELDUNG

(11) **EP 4 755 821 A1**
(43) Veröffentlichungstag der Anmeldung: **10.06.2026**
(21) Anmeldenummer: 25219202.6
(22) Anmeldetag: 27.11.2025
(51) Int. Cl.: B65G 1/02, F16P 3/14, B65G 1/04, B65G 43/00

(54) **VARIABLE BEREICHSABSICHERUNG FÜR STÜCKGUTLAGER**

(30) Priorität: 06.12.2024 DE 102024136452
(71) Anmelder: manroland Goss web systems GmbH, 86153 Augsburg (DE)
(72) Erfinder: Benz, Martin, 89558 Böhmenkirch (DE); Stegmair, Johannes, 86444 Affing (DE)

(57) **Zusammenfassung**

Die Erfindung betrifft eine Bereichsabsicherung (1) für ein Stückgutlager (2), wobei das Stückgutlager (2) einen Sicherheitsbereich (3) zur Lagerung von Stückgut (4) umfasst, und wobei in Erstreckung der ersten Ausdehnung (x) mit einem Mindestabstand (a) zueinander beabstandet mindestens zwei Transportvorrichtungen (5) zum Verbringen von Stückgut (4) in und/oder aus dem Sicherheitsbereich (3) angeordnet sind, sowie ein Verfahren hierzu.

Der Erfindung liegt die Aufgabe zugrunde, eine Lösung zu schaffen, die es ermöglicht, einen Bereich mittels einer sehr geringen Anzahl von Lichtquellen abzusichern und gleichzeitig den abgesicherten Bereich an einer Mehrzahl von unterschiedlichen Stellen für den Durchtritt von Transportwagen (10) und/oder Stückgut (4) durchgängig zu machen.

Dies wird dadurch gelöst, dass die erste Ausdehnung (x) zumindest partiell mittels mindestens zwei gegenüber angeordneten Laserscannern (6) zum Zwecke der Personensicherheit mit einer optischen Barriere (7) abgesichert ist, wobei die Laserscanner (6) derart ansteuerbar sind, dass abhängig von Steuerbefehlen für mindestens eine Transportvorrichtung (5) der Bereich der ersten Transportvorrichtung (5-1) und/oder der Bereich der zweiten Transportvorrichtung (5-2) zum Durchführen von Stückgut (4) temporär jeweils eine Aussparung (8) in der optischen Barriere (7) erzeugbar ist, sowie ein Verfahren hierzu.

## Beschreibung

Die Erfindung betrifft eine Bereichsabsicherung für ein Stückgutlager, wobei das Stückgutlager einen Sicherheitsbereich zur Lagerung von Stückgut umfasst, wobei der Sicherheitsbereich eine erste Ausdehnung x und eine zweite Ausdehnung y aufweist, und wobei in Erstreckung der ersten Ausdehnung x mit einem Mindestabstand a zueinander beabstandet mindestens zwei Transportvorrichtungen zum Verbringen von Stückgut in und/oder aus dem Sicherheitsbereich angeordnet sind.

Zudem betrifft die Erfindung ein computerimplementiertes Verfahren zur sicherheitstechnischen Überwachung eines Stückgutlagers, wobei das Stückgutlager einen Sicherheitsbereich zur Lagerung von Stückgut umfasst, wobei der Sicherheitsbereich eine erste Ausdehnung x und eine zweite Ausdehnung y aufweist, und wobei in Erstreckung der ersten Ausdehnung x mit einem Mindestabstand a zueinander beabstandet mindestens zwei Transportvorrichtungen zum Verbringen von Stückgut in und/oder aus dem Sicherheitsbereich angeordnet sind und von einer Steuerungseinrichtung mittels Steuerbefehlen angesteuert werden.

Beispielsweise bei Substrat verarbeitenden Maschinen, wie beispielsweise bei Bogendruckmaschinen, Rollendruckmaschinen, Nachverarbeitungseinrichtungen zum Be- und Verarbeiten von bedruckten Substraten aber auch bei vielen anderen Anwendungen wird Stückgut, wie beispielsweise mit Einzelteilen beladene und/oder unbeladene Paletten, Gebinde wie beispielsweise in Gitterboxen gestapelte Einzelteile oder auch beispielsweise bedruckte oder unbedruckte Substratrollen in einem Zwischenlager für nachfolgende Bearbeitungsschritte zwischengelagert oder werden in einem vor einer Bearbeitungseinrichtung angeordneten Pufferlager vorgehalten. Zur Sicherstellung eines hohen Automatisierungsgrades wird hierbei das Stückgut wie beispielsweise Paletten, Gitterboxen oder auch rollenförmige Gebinde wie Substratrollen mittels fest verbauten Transportvorrichtungen wie beispielsweise Plattenförderer oder schienengebundene Transportwagen oder Kränen bedarfsgerecht in der Regel automatisiert in derartige Stückgutlager verbracht und/oder aus diesen herausbefördert. Da derartige Transportvorrichtungen im Gegensatz zu beispielsweise selbstfahrenden Transportfahrzeugen wie AGVs (Automated Guided Vehicles), also sich selbst steuernde Fahrzeuge wie bedienerlos betriebene Flurförderfahrzeuge, welche mit entsprechenden Scannern zur Vermeidung von Kollisionen mit Gegenständen oder Personen ausgestattet sind, nicht mittels technisch aufwändiger Sensoren und autarken Steuerungen abgesichert sind, besteht folglich hierbei Bedarf an der Absicherung relevanter Bereiche insbesondere im Hinblick auf Personensicherheit.

Da in derartigen Stückgutlagern wie beispielsweise Rollenlagern einer Druckerei das Stückgut entsprechend platzsparend und somit mit nur geringen Abständen zueinander angeordnet und gelagert werden soll, besteht somit grundsätzlich die Gefahr, dass Personen wie das Bedienpersonal durch automatisch transportiertes Stückgut eingequetscht werden können, weshalb derartige Stückgutlager eine entsprechende sicherheitstechnische Absperrung aufweisen müssen. Dies kann im einfachsten Fall eine Einzäunung sein, so dass dort unbefugter Zutritt nicht möglich ist beziehungsweise dass beim Öffnen von Zugangsmöglichkeiten wie Türen der automatische Transport von Stückgut und/oder das automatische Verfahren von Transportvorrichtungen unterbrochen wird.

Da derartige mechanische Absicherungen jedoch grundsätzlich für den Transport von Transportvorrichtungen und/oder Stückgut hinderlich sind und hierfür sicherheitstechnisch abgesicherte Tore erforderlich wären, sind aus dem Stand der Technik ferner Bereichsabsicherungen bekannt, welche in mindestens einem Bereich, in der Regel ist dies der Bereich der Zufuhr und/oder des Abtransportes von Transportvorrichtungen und/oder Stückgut, eine optische Absicherung in Form von Lichtgittern oder Lichtstrahlen aufweisen, welche von einer Steuerungsvorrichtung freigeschaltet werden, wenn eine Transportvorrichtung und/oder ein Stückgut hindurch gefördert werden soll, gleichzeitig aber das automatische Bewegen von Transportwagen und/oder Stückgut ausgeschlossen wird, wenn ein unbefugter Durchtritt einer Person detektiert wird.

Die aus dem Stand der Technik bekannten Bereichsabsicherungen weisen jedoch den Nachteil auf, dass hiermit immer nur ein einzelner räumlich definierter Bereich mittels einer optischen Absicherung absicherbar ist, so dass für den Fall, dass ein Stückgutlager an mehreren Stellen mit Stückgut versorgt und/oder entsorgt werden kann, eine Vielzahl derartiger Lichtgitter erforderlich ist, was zum einen hohe Kosten verursacht und zudem aufgrund der Vielzahl von verbauten Lichtquellen und Lichtsensoren eine hohe Störanfälligkeit und einen hohen Wartungsaufwand verursacht.

Der Erfindung liegt daher die Aufgabe zugrunde, eine Lösung zu schaffen, die es ermöglicht, einen Bereich mittels einer sehr geringen Anzahl von Lichtquellen abzusichern und gleichzeitig den abgesicherten Bereich an einer Mehrzahl von unterschiedlichen Stellen für den Durchtritt von Transportwagen und/oder Stückgut durchgängig zu machen.

Die Aufgabe wird erfindungsgemäß dadurch gelöst, dass die erste Ausdehnung x zumindest partiell mittels mindestens zwei gegenüber angeordneten Laserscannern zum Zwecke der Personensicherheit mit einer optischen Barriere abgesichert ist, wobei die Laserscanner derart ansteuerbar sind, dass abhängig von Steuerbefehlen für mindestens eine Transportvorrichtung der Bereich der ersten Transportvorrichtung und/oder der Bereich der zweiten Transportvorrichtung zum Durchführen von Stückgut temporär jeweils eine Aussparung in der optischen Barriere erzeugbar ist.

Die Aufgabe wird ferner durch ein computerimplementiertes Verfahren gelöst, bei welchem die erste Ausdehnung x zumindest partiell mittels mindestens zwei gegenüber angeordneten Laserscannern zum Zwecke der Personensicherheit mit einer optischen Barriere abgesichert wird, wobei die mindestens zwei Laserscanner derart von der Steuerungseinrichtung angesteuert werden, dass abhängig von Steuerbefehlen für mindestens eine Transportvorrichtung der Bereich der ersten Transportvorrichtung und/oder der Bereich der zweiten Transportvorrichtung zum Durchführen von Stückgut temporär in der optischen Barriere jeweils eine Aussparung in der optischen Barriere erzeugt wird.

Eine derartige Vorrichtung und ein derartiges Verfahren weisen den Vorteil auf, dass damit durch eine geringe Anzahl von Lichtquellen beziehungsweise Sensoren eine Mehrzahl von unterschiedlichen Stellen für den Durchtritt von Transportwagen und/oder Stückgut durchgängig zu machen, ohne dass hierbei Abstriche in der Qualität der Personensicherheit erforderlich wären. Somit können die Investitionskosten für die sicherheitstechnischen Einrichtungen gesenkt werden, aufgrund der geringen Anzahl von verbauten Lichtquellen und Sensoren sinkt das technische Ausfallrisiko sowie der zum sicheren Betrieb erforderliche Wartungs- und Reinigungsaufwand. Zudem ist bei sich ändernden Abmessungen der zu transportierenden Stückgüter kein mechanischer Umbau der Sicherheitsschleusen erforderlich.

Gemäß einer Ausgestaltung weist die mindestens eine in der optischen Barriere erzeugte Aussparung eine definierbare und/oder veränderbare Breite b auf beziehungsweise wird die mindestens eine Aussparung in ihrer Breite b in Abhängigkeit von dem zu transportierenden Stückgut verändert.

Diese Ausgestaltung weist den Vorteil auf, dass damit die Breite b der Aussparungen an das durch die optische Barriere hindurchzufördernde Transportmittel und/ oder Stückgut angepasst werden kann. Somit kann vermieden werden, dass im Falle schmaler Stückgüter ein unnötig großer Freiraum zwischen dem Stückgut und der optischen Barriere entsteht, so dass damit vermieden werden kann, dass eine Person neben dem Stückgut herlaufen kann und somit die optische Barriere unerkannt durchdringen und somit in unzulässiger Weise in den Sicherheitsbereich gelangen kann.

Gemäß einer weiteren Ausgestaltung ist die mindestens eine Aussparung in ihrer Kontur veränderbar beziehungsweise wird die mindestens eine Aussparung in ihrer Kontur in Abhängigkeit von dem zu transportierenden Stückgut verändert.

Eine derartige Ausgestaltung weist den Vorteil auf, dass damit die Kontur der Aussparungen an das durch die optische Barriere hindurchzufördernde Transportmittel und/oder Stückgut angepasst werden kann. Somit kann vermieden werden, dass beispielsweise im Fall zylindrischer Stückgüter zumindest partiell ein unnötig großer Freiraum zwischen dem Stückgut und der optischen Barriere entsteht, so dass damit vermieden werden kann, dass eine Person neben dem Stückgut herlaufen kann und somit die optische Barriere unerkannt durchdringen und somit in unzulässiger Weise in den Sicherheitsbereich gelangen kann.

Gemäß einer weiteren Ausgestaltung ist das Stückgutlager als ein Rollenlager ausgebildet und das Stückgut ist eine Substratrolle.

Eine derartige Ausgestaltung weist den Vorteil auf, dass damit das Rollenlager einer Druckerei oder einer Druckmaschine hinsichtlich der Zuführmöglichkeiten sehr variabel ausgeführt werden kann, da die Zuführung der Substratrollen nicht mehr nur durch eine oder durch wenige entsprechend abgesicherte Stellen für die Rollendurchtritte in den Sicherheitsbereich begrenzt ist, so dass im Falle einer mehrreihigen Anordnung der Lagerplätze die Zufuhr beziehungsweise der Abtransport der Neurollen und/oder der Restrollen ohne zusätzlichen technischen Aufwand an beliebigen Orten erfolgen kann, ohne dass eine Beförderung senkrecht zu den Zuführpfaden innerhalb des Sicherheitsbereichs erforderlich wäre.

Gemäß einer weiteren Ausgestaltung ist das Stückgutlager einer Druckmaschine, insbesondere dem Rollenwechsler einer Rollendruckmaschine vorgelagert.

Eine derartige Ausgestaltung weist den Vorteil auf, dass damit der dem Rollenwechsler vorgelagerte Rollenversorgungsbereich hinsichtlich der Zuführmöglichkeiten sehr variabel ausgeführt werden kann, da die Zuführung der Substratrollen nicht mehr nur durch eine oder durch wenige entsprechend abgesicherte Stellen für die Rollendurchtritte in den Sicherheitsbereich begrenzt ist, so dass im Falle einer mehrreihigen Anordnung der Lagerplätze die Zufuhr beziehungsweise der Abtransport der Neurollen und/oder der Restrollen ohne zusätzlichen technischen Aufwand an beliebigen Orten erfolgen kann, ohne dass eine Beförderung senkrecht zu den Zuführpfaden innerhalb des Sicherheitsbereichs erforderlich wäre.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: Ein beispielhaft als Rollenlager ausgebildetes Stückgutlager mit einer Mehrzahl von zuzuführenden, als Substratrollen ausgestalteten Stückgütern
- Fig. 2: Ein beispielhaft als Rollenlager ausgebildetes Stückgutlager mit einem an einer ersten Position zuzuführenden Stückgut
- Fig. 3: Ein beispielhaft als Rollenlager ausgebildetes Stückgutlager mit einem an einer von der ersten abweichenden zweiten Position zuzuführenden Stückgut
- Fig. 4: Ein Beispiel einer an die Außenform des Stückgutes angepasste Kontur der Öffnung

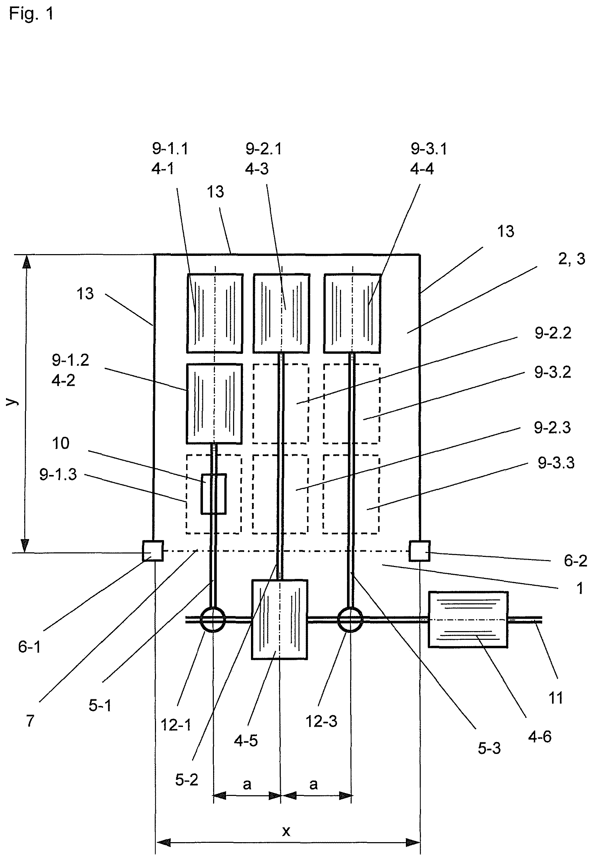

Fig. 1 zeigt die Draufsicht eines beispielhaft als Rollenlager ausgestalteten Stückgutlagers 2. Wenngleich die Figuren 1 bis 4 sich alle auf Beispiele beziehen, bei denen als Stückgut 4 eine Substratrolle, wie beispielsweise eine Rolle von zu bedruckendem Papier dargestellt ist, so ist diese Form des Stückgutes 4 rein beispielhaft. Ein Stückgut 4 ist somit nicht auf eine Substratrolle begrenzt, sondern kann für alle gewerblich gehandhabten Stückgüter 4 wie beispielsweise Paletten, Gitterboxen, Gebinde, insbesondere Großgebinde für Fluide oder Feststoffe angewandt werden.

Fig. 1 zeigt die Draufsicht auf ein Stückgutlager 2 mit einer ersten Ausdehnung x und einer zweiten Ausdehnung y zur Aufnahme einer Mehrzahl von Stückgütern 4, nämlich im gezeigten Beispiel zur Aufnahme von maximal neun Stückgütern 4, weshalb das in Fig. 1 gezeigte Beispiel ein Stückgutlager 2 mit neun Lagerplätzen 9 zeigt. Ein unbesetzter Lagerplatz 9 ist hierbei als ein Rechteck mit einer unterbrochenen Linie dargestellt, wohingegen ein besetzter Lagerplatz 9 als ein darauf gelagertes Stückgut 4 am Beispiel einer Substratrolle dargestellt ist.

Das Stückgutlager 2 wird mittels einer Zuführeinrichtung 11 versorgt, welche beispielhaft als eine in den Boden eingelassenen oder darauf aufgesetzten Schiene dargestellt ist, wenngleich die Zuführeinrichtung 11 auch andere Ausgestaltungen wie beispielsweise ein Plattenband oder ein Förderband oder eine Kranbahn aufweisen kann.

Bei dem in Fig. 1 dargestellten Beispiel kann mittels der Zuführeinrichtung 11 ein oder mehrere Transportwagen 10 bewegt werden, welcher beispielsweise mit einem in der Zuführeinrichtung 11 und in Fig. 1 nicht dargestellten Kettenfördersystem angetrieben wird.

Die Zuführeinrichtung 11 weist bei dem in Fig. 1 dargestellten Beispiel drei Drehscheiben 12 auf, mit welchen ein Transportwagen 10 von der ersten Richtung der Zuführeinrichtung 11 in eine zweite Richtung der Transportvorrichtungen 5 und umgekehrt umgelenkt werden kann, indem ein Transportwagen 10 auf einer Drehscheibe 12 positioniert wird und die entsprechende Drehscheibe 12 entsprechend verdreht wird.

Bei dem in Fig. 1 dargestellten Beispiel umfasst das Stückgutlager 2 insgesamt drei mit jeweils im Abstand a voneinander beabstandete Transportvorrichtungen 5, nämlich eine erste Transportvorrichtung 5-1, eine zweite Transportvorrichtung 5-2 und eine dritte Transportvorrichtung 5-3, welche allesamt im Wesentlichen rechtwinklig zur Zuführeinrichtung 11 angeordnet sind.

Die Transportvorrichtungen 5 werden vorzugsweise mit dem selben technischen Wirkprinzip wie die Zuführeinrichtung 11 ausgestaltet, das heißt beispielsweise als ein Schienensystem mit darin angeordneten Transportketten zum Antrieb der entsprechenden Transportwagen 10.

Bei dem in Fig. 1 dargestellten Beispiel sind in Erstreckung der ersten Transportvorrichtung 5-1 hintereinander drei Lagerplätze 9 angeordnet, nämlich die Lagerplätze 9-1.1, 9-1.2 und 9-1.3, welche über die erste Transportvorrichtung 5-1 mittels Transportwagen 10 be- und entladen werden können. Bei dem in Fig. 1 dargestellten Beispiel ist der Lagerplatz 9-1.1 mit einem ersten Stückgut 4-1 belegt und der Lagerplatz 9-1.2 ist mit einem zweiten Stückgut 4-2 belegt. Der Lagerplatz 9-1.3 ist noch frei, auf diesem ist ein Transportwagen 10 geparkt.

Bei dem in Fig. 1 dargestellten Beispiel sind in Erstreckung der zweiten Transportvorrichtung 5-2 hintereinander drei Lagerplätze 9 angeordnet, nämlich die Lagerplätze 9-2.1, 9-2.2 und 9-2.3, welche über die zweite Transportvorrichtung 5-2 mittels Transportwagen 10 be- und entladen werden können. Bei dem in Fig. 1 dargestellten Beispiel ist der Lagerplatz 9-2.1 mit einem dritten Stückgut 4-3 belegt. Die Lagerplätze 9-2.2 und 9-2.2 sind noch frei.

Bei dem in Fig. 1 dargestellten Beispiel sind in Erstreckung der dritten Transportvorrichtung 5-3 hintereinander drei Lagerplätze 9 angeordnet, nämlich die Lagerplätze 9-3.1, 9-3.2 und 9-3.3, welche über die dritte Transportvorrichtung 5-3 mittels Transportwagen 10 be- und entladen werden können. Bei dem in Fig. 1 dargestelltem Beispiel ist der Lagerplatz 9-3.1 mit einem vierten Stückgut 4-4 belegt. Die Lagerplätze 9-3.2 und 9-3.3 sind noch frei.

Eine derartige Konzeption eines Stückgutlagers 2 bietet den Vorteil, dass somit innerhalb des Sicherheitsbereiches 3 kein Transport der Stückgüter in Erstreckung der Zuführeinrichtung 11 erforderlich ist, weshalb diese Konfiguration sehr platzsparend ist.

Die Lagerplätze 9 können abhängig von verschiedenen Kriterien belegt und wieder frei gemacht werden, was in einer gesonderten Logistiksoftware erfolgt. Diese steuert mittels einer in Fig. 1 nicht dargestellten Steuerungseinrichtung die unbeladenen und/oder mittels Stückgütern 4 beladenen Transportwagen 10, so dass die Bewegung der Transportwagen 10 automatisiert erfolgt.

Da somit beim automatisierten Be- und Entladen des Stückgutlagers 2 eine Gefahr für sich darin befindliche Personen besteht, ist das Stückgutlager 2 gegen unbefugten Zutritt mittels mindestens einer Bereichsabsicherung 1 abgesichert. Bei dem in Fig. 1 dargestellten Beispiel ist das Stückgutlager 2 in dem Bereich, welcher an die Zuführeinrichtung 11 angrenzt, mittels einer Bereichsabsicherung 1 abgesichert, welche nachfolgend näher beschrieben wird, da bei dem in Fig. 1 dargestellten Beispiel nur über diesen Bereich Stückgüter 4 in das Stückgutlager 2 hineingefördert und aus dem Stückgutlager 2 herausgefördert werden. Die restlichen drei Seiten des Stückgutlagers 2 sind bei dem in Fig. 1 dargestellten Beispiel mittels mechanischer Zugangssicherungen 13 wie beispielsweise fest montierte Absperrgitter oder Einzäunungen gegen unbefugtes Betreten abgesichert.

Wenngleich das in Fig. 1 dargestellte Beispiel nur die Absicherung einer Seite des Stückgutlagers 2 mit einer Bereichsabsicherung 1 zeigt, so ist es auch möglich, mehr als nur eine Seite des Stückgutlagers 2 mittels einer Bereichsabsicherung 1 abzusichern. Dies ist insbesondere dann sinnvoll, wenn beispielsweise die Zufuhr von Stückgütern 4 in das Rollenlager 2 und/oder der Abtransport von Stückgütern 4 aus dem Stückgutlager 2 heraus auf mehreren Seiten des Stückgutlagers 2 erfolgt.

Die in Fig. 1 dargestellte Bereichsabsicherung 1 umfasst zwei Laserscanner 6, wobei jeweils ein Laserscanner 6 an einem Ende des abzusichernden Bereichs angeordnet ist.

Wenngleich bei dem in Fig. 1 dargestellten Beispiel nur eine Bereichsabsicherung 1 dargestellt ist, welche zwei Laserscanner 6 umfasst, so ist es beispielsweise abhängig von der Länge des abzusichernden Bereiches auch möglich, mehr als zwei Laserscanner 6 zu verwenden.

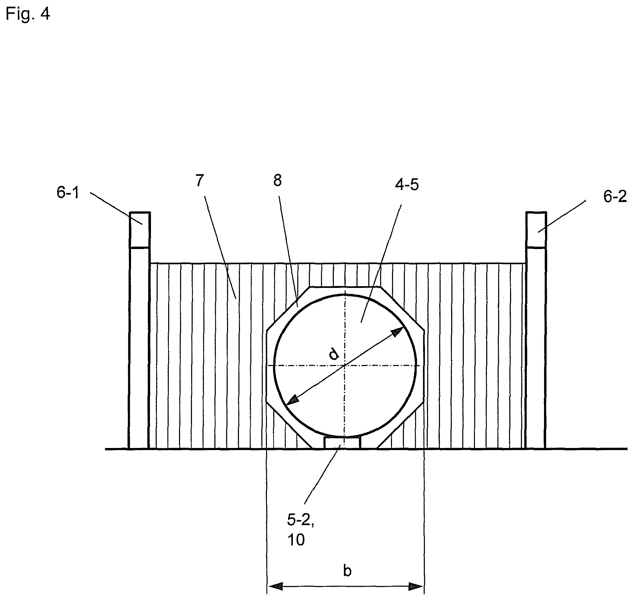

Der erste Laserscanner 6-1 und der zweite Laserscanner 6-2 bauen hierbei eine in Fig. 1 als Stichpunktlinie dargestellte vertikal verlaufende optische Barriere 7, wie diese beispielsweise auch in Fig. 4 dargestellt ist.

Wird diese optische Barriere 7 von einem Gegenstand oder einer Person betreten oder durchschritten, so wird dieses Eindringen eines Gegenstandes oder einer Person von mindestens einem der beiden Laserscanner 6 erkannt, so dass jedwede automatisierte Bewegung eines im Sicherheitsbereich 3 befindlichen Transportwagens 10 gestoppt wird und eine weitere Bewegung eines unbeladenen oder beladenen Transportwagens 10 erst nach einer Freigabe durch das Bedienpersonal wieder möglich ist.

Bei dem in Fig. 1 dargestellten Zustand ist die optische Barriere 7 durchgängig, da das Stückgut 4-5 noch außerhalb des Sicherheitsbereiches 3 ist, das sechste Stückgut 4-6 befindet sich noch auf der Zuführeinrichtung 11 und ist somit noch nicht in das Stückgutlager 2 einbringbar, da hierzu das sechste Stückgut 4-6 zuerst von einer Drehscheibe 12 in die richtige Position gebracht werden muss.

Da jedoch die Bereichsabsicherung 1 auf jedwedes Eindringen eines Gegenstandes oder einer Person mit Abschaltung der automatischen Bewegung der beladenen und/oder unbeladenen Transportwagen 10 reagiert, ist somit zum Einbringen oder Ausbringen eines Stückgutes 4 in das Stückgutlager 2 eine entsprechende partielle und temporäre Unterbrechung der optischen Barriere 7 erforderlich, um ein unbeabsichtigtes Stillsetzen der automatisierten Bewegungen der beladenen und/oder unbeladenen Transportwagen 10 zu vermeiden.

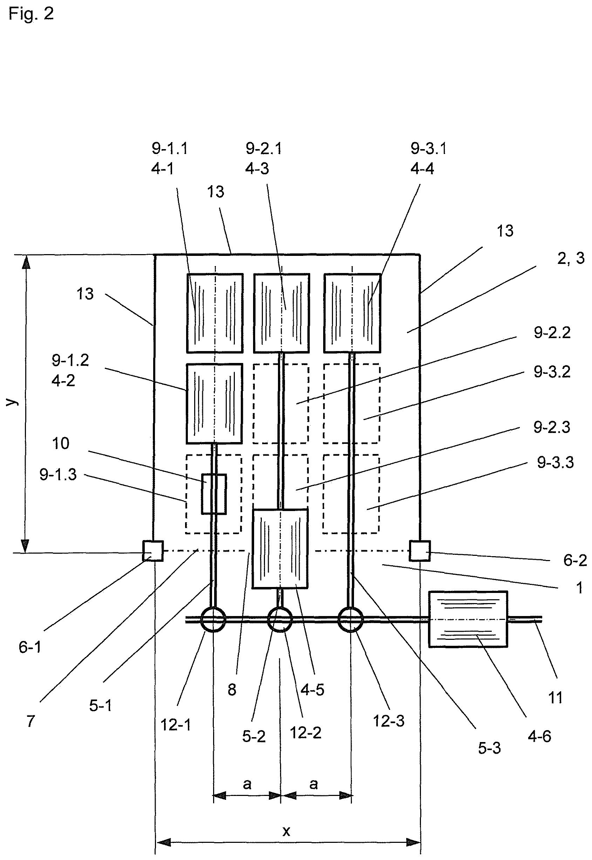

Fig. 2 zeigt einen Zustand, bei welchem das fünfte Stückgut 4-5 von der zweiten Drehscheibe 12-2 entlang der zweiten Transportvorrichtung 5-2 in das Stückgutlager 2 und somit in den Sicherheitsbereich 3 mittels einem nicht dargestellten Transportwagen 10 gefördert wird.

Um ein Stillsetzen der automatisierten Bewegung der entsprechenden Transporwagen 10 oder sonstigen Transportvorrichtungen 5 mindestens innerhalb des Sicherheitsbereiches 3 bei Kontakt des fünften Stückgutes 4-5 mit der optischen Barriere 7 zu vermeiden, wird bei dem in Fig. 2 dargestellten Beispiel mindestens einer der beiden Laserscanner 6 abhängig von der Steuerbefehlen für die zweite Transportvorrichtung 5-2 derart angesteuert, dass im Bereich der zweiten Transportvorrichtung 5-2 eine Aussparung 8 in der optischen Barriere 7 erzeugt wird. Der Bereich der Aussparung 8 wird folglich nicht durch die optische Barriere 7 im Sinne einer Bereichsabsicherung 1 überwacht, so dass bei dem in Fig. 2 dargestellten Beispiel das fünfte Stückgut 4-5 mittels der zweiten Transportvorrichtung 5-2 in den Sicherheitsbereich 3 verbracht werden kann, ohne dass hierbei eine automatisierte Bewegung einer Transportvorrichtung 5 beziehungsweise eines Transportwagens 10 im Sicherheitsbereich 3 unterbrochen wird.

Für das Einbringen des fünften Stückgutes 4-5 in den Sicherheitsbereich 3 wird mindestens einer der beiden Laserscanner 6 von der in Fig. 2 nicht dargestellten Steuerungseinrichtung abhängig von den Steuerbefehlen für die zweite Transportvorrichtung 5-2 angesteuert, was bedeutet, dass die Aussparung 8 nur in dem Bereich der zweiten Transportvorrichtung 5-2 in die optische Barriere 7 angebracht wird, um ein unerkanntes Durchschreiten der optischen Barriere 7 durch Bedienpersonal an anderer Stelle als im Bereich der zweiten Transportvorrichtung 5-2 auszuschließen. Ferner ist die Unterbrechung der optischen Barriere 7 durch die Abhängigkeit der Steuerbefehle für die zweite Transportvorrichtung 5-2 möglich, dass die Aussparung 8 in der optischen Barriere 7 und somit in der Bereichsabsicherung 1 erst dann realisiert wird, wenn ein Durchtritt des fünften Stückgutes 4-5 durch die optische Barriere 7 unmittelbar bevorsteht, und dass die Aussparung 8 wieder verschwindet, vorzugsweise unmittelbar nachdem das fünfte Stückgut 4-5 den Bereich der optischen Barriere 7 überschritten hat. So kann vermieden werden, dass eine Person vor dem fünften Stückgut 4-5 herlaufen kann oder unmittelbar nach dem fünften Stückgut 4-5 nachlaufen kann, ohne von der Bereichsabsicherung 1 erkannt zu werden.

Hierzu liegen in vorteilhafter Ausgestaltung der Steuereinrichtung die Abmessungen der jeweils zu transportierenden Stückgüter 4 wie Breite, das heißt die Abmessung senkrecht zur Bewegungsrichtung, Länge, das heißt die Abmessung in Erstreckung der Bewegungsrichtung und die Höhe vor. In diesem Fall kann dann auch die Breite b der jeweiligen Aussparung 8 in Abhängigkeit von dem zu transportierenden Stückgut 4 verändert werden. Dies hat den Vorteil, dass damit vermieden werden kann, dass eine Person in Bewegungsrichtung gesehen seitlich neben dem zu transportierenden Stückgut 4 herlaufen kann und somit von der Bereichsabsicherung 1 unerkannt in den Sicherheitsbereich 3 gelangen kann.

Ferner ist es vorteilhaft, wenn in der Steuereinrichtung auch die Kontur des jeweiligen Stückgutes 4 hinterlegt ist, so dass auch die Kontur einer jeweiligen Aussparung 8 in Abhängigkeit von dem zu transportierenden Stückgut 4 beziehungsweise in Abhängigkeit von der Kontur des zu transportierenden Stückgutes 4 anpassbar beziehungsweise veränderbar ist. Somit kann beispielsweise bei Stückgütern 4 mit einem großen zylindrischen Querschnitt vermieden werden, dass sich in gebückter Haltung neben dem Stückgut herlaufende Personen nicht von der Bereichsabsicherung erkannt werden.

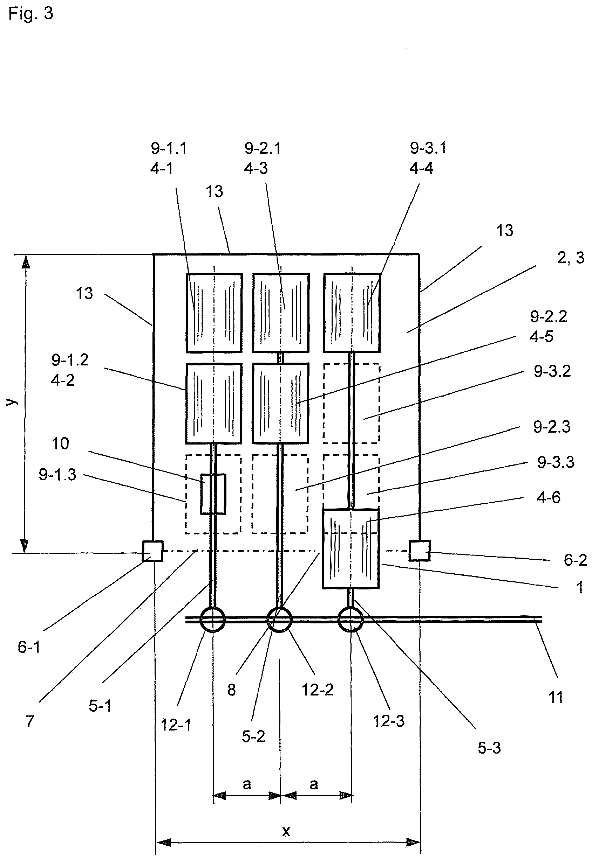

Fig. 3 zeigt das in den Figuren 1 und 2 dargestellte Stückgutlager 2 zu einem Zeitpunkt, bei welchem das fünfte Stückgut 4-5 auf den Lagerplatz 9-2.2 verbracht wurde und das in den Figuren 1 und 2 noch auf der Zuführeinrichtung 11 befindliche sechste Stückgut 4-6 mittels der dritten Transportvorrichtung 5-3 in den Sicherheitsbereich 3 verbracht wird.

Um ein Stillsetzen der automatisierten Bewegung der entsprechenden Transportwagen 10 oder sonstigen Transportvorrichtungen 5 mindestens innerhalb des Sicherheitsbereiches 3 bei Kontakt des sechsten Stückgutes 4-6 mit der optischen Barriere 7 zu vermeiden, wird bei dem in Fig. 3 dargestellten Beispiel mindestens einer der beiden Laserscanner 6 abhängig von den Steuerbefehlen für die dritte Transportvorrichtung 5-3 derart angesteuert, dass im Bereich der dritten Transportvorrichtung 5-3 eine Aussparung 8 in der optischen Barriere 7 erzeugt wird. Der Bereich der Aussparung 8 wird folglich nicht durch die optische Barriere 7 im Sinne einer Bereichsabsicherung 1 überwacht, so dass bei dem in Fig. 3 dargestellten Beispiel das sechste Stückgut 4-6 mittels der dritten Transportvorrichtung 5-3 in den Sicherheitsbereich 3 verbracht werden kann, ohne dass hierbei eine automatisierte Bewegung einer Transportvorrichtung 5 beziehungsweise eines Transportwagens 10 im Sicherheitsbereich 3 unterbrochen wird.

Für das Einbringen des sechsten Stückgutes 4-6 in den Sicherheitsbereich 3 wird mindestens einer der beiden Laserscanner 6 von der in Fig. 3 nicht dargestellten Steuerungseinrichtung abhängig von den Steuerbefehlen für die dritte Transportvorrichtung 5-3 angesteuert, was bedeutet, dass die Aussparung 8 nur in dem Bereich der dritten Transportvorrichtung 5-3 in die optische Barriere 7 angebracht wird, um ein unerkanntes Durchschreiten der optischen Barriere 7 durch Bedienpersonal an anderer Stelle als im Bereich der dritten Transportvorrichtung 5-3 auszuschließen. Ferner ist die Unterbrechung der optischen Barriere 7 durch die Abhängigkeit der Steuerbefehle für die dritte Transportvorrichtung 5-3 möglich, dass die Aussparung 8 in der optischen Barriere 7 und somit in der Bereichsabsicherung 1 erst dann realisiert wird, wenn ein Durchtritt des sechsten Stückgutes 4-6 durch die optische Barriere 7 unmittelbar bevorsteht, und dass die Aussparung 8 wieder verschwindet, vorzugsweise unmittelbar nachdem das sechste Stückgut 4-6 den Bereich der optischen Barriere 7 überschritten hat. So kann vermieden werden, dass eine Person vor dem sechsten Stückgut 4-6 herlaufen kann oder unmittelbar nach dem sechsten Stückgut 4-6 nachlaufen kann, ohne von der Bereichsabsicherung 1 erkannt zu werden.

Wenngleich in den Figuren 2 und 3 nur die beispielhaften Fälle dargestellt sind, dass nur durch die zweite Transportvorrichtung 5-2 oder nur durch die dritte Transportvorrichtung 5-3 und somit sequentiell Stückgüter 4 in den Sicherheitsbereich 3 verbracht werden, so ist es selbstverständlich auch möglich, dass an mehreren der Transportvorrichtungen 5 gleichzeitig eine Mehrzahl von Aussparungen 8 zum Einbringen und/oder Ausbringen von einer Mehrzahl von Stückgütern 4 und/oder Transportwagen 10 in der optischen Barriere 7 zu erzeugen. Hierzu kann es abhängig von der Form und/oder von den Abmessungen der Stückgüter 4 und/oder der Transportwagen 10 oder der Ausgestaltung der Transportvorrichtungen 5 und/oder abhängig von den Abständen a zwischen den Transportvorrichtungen 5 möglicherweise erforderlich sein, mindestens einen zusätzlichen Laserscanner 6 zu platzieren, um zu vermeiden, dass im Schatten insbesondere eines Stückgutes 4 keine optische Barriere 7 erzeugt werden kann, um entsprechende Lücken hinsichtlich der Personensicherheit zu vermeiden.

Fig. 4 zeigt eine Sicht in Blickrichtung der zweiten Transportvorrichtung 5-2 in einer Situation gemäß Fig. 2, das heißt, Fig. 4 zeigt die beispielhafte Situation beim Durchfahren des fünften Stückgutes 4-5 mittels eines Transportwagens 10 auf der zweiten Transportvorrichtung 5-2 durch die optische Barriere 7, welche bei dem in Fig. 4 dargestellten Beispiel durch den ersten Laserscanner 6-1 und den zweiten Laserscanner 6-2 erzeugt wird. Hierbei ist das fünfte Stückgut 4-5 als eine zylindrische Substratrolle mit einem Durchmesser d ausgebildet.

Wie oben bereits dargelegt, liegen in vorteilhafter Ausgestaltung der Steuereinrichtung die Abmessungen der jeweils zu transportierenden Stückgüter 4 wie Breite, das heißt die Abmessung senkrecht zur Bewegungsrichtung, Länge, das heißt die Abmessung in Erstreckung der Bewegungsrichtung und die Höhe und/oder der Durchmesser d und/oder die Kontur des relevanten Querschnittes vor. In diesem Fall kann die Breite b der jeweiligen Aussparung 8 und/oder die Kontur der jeweiligen Aussparung 8 in Abhängigkeit von dem zu transportierenden Stückgut 4 verändert werden. Dies hat den Vorteil, dass damit vermieden werden kann, dass eine Person in Bewegungsrichtung gesehen seitlich neben dem zu transportierenden Stückgut 4 herlaufen kann und somit von der Bereichsabsicherung 1 unerkannt in den Sicherheitsbereich 3 gelangen kann.

Fig. 4 zeigt beispielhaft am Beispiel eines Stückgutes 4-5 mit einem kreisförmigen Querschnitt mit einem Durchmesser d, dass hierbei die Breite b der Aussparung 8 als auch die Kontur der Aussparung 8 in der optischen Barriere 7 derart an die den Durchmesser d und die Kontur des Stückgutes 4 angepasst ist, dass somit keine nicht überwachten Bereiche bestehen, in denen eine Person unbefugt Zugang in den Sicherheitsbereich 3 des Stückgutlagers 2 erlangen könnte.

### Bezugszeichenliste

- 1: Bereichsabsicherung
- 2: Stückgutlager
- 3: Sicherheitsbereich
- 4: Stückgut
- 5: Transportvorrichtung
- 6: Laserscanner
- 7: optische Barriere
- 8: Aussparung
- 9: Lagerplatz
- 10: Transportwagen
- 11: Zuführeinrichtung
- 12: Drehscheibe
- 13: Zugangssicherung

- x: erste Ausdehnung
- y: zweite Ausdehnung
- a: Mindestabstand
- b: Breite Aussparung
- d: Durchmesser

## Patentansprüche

1. Bereichsabsicherung (1) für ein Stückgutlager (2), wobei das Stückgutlager (2) einen Sicherheitsbereich (3) zur Lagerung von Stückgut (4) umfasst, wobei der Sicherheitsbereich (3) eine erste Ausdehnung x und eine zweite Ausdehnung y aufweist, und wobei in Erstreckung der ersten Ausdehnung x mit einem Mindestabstand a zueinander beabstandet mindestens zwei Transportvorrichtungen (5) zum Verbringen von Stückgut (4) in und/oder aus dem Sicherheitsbereich (3) angeordnet sind, **dadurch gekennzeichnet, dass** die erste Ausdehnung x zumindest partiell mittels mindestens zwei gegenüber angeordneten Laserscannern (6) zum Zwecke der Personensicherheit mit einer optischen Barriere (7) abgesichert ist, wobei die Laserscanner (6) derart ansteuerbar sind, dass abhängig von Steuerbefehlen für mindestens eine Transportvorrichtung (5) der Bereich der ersten Transportvorrichtung (5-1) und/oder der Bereich der zweiten Transportvorrichtung (5-2) zum Durchführen von Stückgut (4) temporär jeweils eine Aussparung (8) in der optischen Barriere (7) erzeugbar ist.

2. Bereichsabsicherung (1) nach Anspruch 1, **dadurch gekennzeichnet, dass** die mindestens eine in der optischen Barriere (7) erzeugte Aussparung (8) eine definierbare und/oder veränderbare Breite b aufweist.

3. Bereichsabsicherung (1) nach einem der Ansprüche 1 bis 2, **dadurch gekennzeichnet, dass** die mindestens eine Aussparung (8) in ihrer Kontur veränderbar ist.

4. Bereichsabsicherung (1) nach einem der Ansprüche 1 bis 3, **dadurch gekennzeichnet, dass** das Stückgutlager (2) als ein Rollenlager ausgebildet ist und dass das Stückgut (4) eine Substratrolle ist.

5. Bereichsabsicherung (1) nach einem der Ansprüche 1 bis 4, **dadurch gekennzeichnet, dass** das Stückgutlager (2) einer Druckmaschine vorgelagert ist.

6. Computerimplementiertes Verfahren zur sicherheitstechnischen Überwachung eines Stückgutlagers (2), wobei das Stückgutlager (2) einen Sicherheitsbereich (3) zur Lagerung von Stückgut (4) umfasst, wobei der Sicherheitsbereich (3) eine erste Ausdehnung x und eine zweite Ausdehnung y aufweist, und wobei in Erstreckung der ersten Ausdehnung x mit einem Mindestabstand a zueinander beabstandet mindestens zwei Transportvorrichtungen (5) zum Verbringen von Stückgut (4) in und/oder aus dem Sicherheitsbereich (3) angeordnet sind und von einer Steuerungseinrichtung mittels Steuerbefehlen angesteuert werden, **dadurch gekennzeichnet, dass** die erste Ausdehnung x zumindest partiell mittels mindestens zwei gegenüber angeordneten Laserscannern (6) zum Zwecke der Personensicherheit mit einer optischen Barriere (7) abgesichert wird, wobei die mindestens zwei Laserscanner (6) derart von der Steuerungseinrichtung angesteuert werden, dass abhängig von Steuerbefehlen für mindestens eine Transportvorrichtung (5) der Bereich der ersten Transportvorrichtung (5-1) und/oder der Bereich der zweiten Transportvorrichtung (5-2) zum Durchführen von Stückgut (4) temporär in der optischen Barriere (7) jeweils eine Aussparung (8) in der optischen Barriere (7) erzeugt wird.

7. Verfahren nach Anspruch 6, **dadurch gekennzeichnet, dass** die mindestens eine Aussparung (8) in ihrer Breite b in Abhängigkeit von dem zu transportierenden Stückgut (4) verändert wird.

8. Verfahren nach einem der Ansprüche 6 bis 7, **dadurch gekennzeichnet, dass** die mindestens eine Aussparung (8) in ihrer Kontur in Abhängigkeit von dem zu transportierenden Stückgut (4) verändert wird.

9. Verfahren nach einem der Ansprüche 6 bis 8, **dadurch gekennzeichnet, dass** das Stückgutlager (2) als ein Rollenlager ausgebildet wird und dass als das Stückgut (4) eine Substratrolle verwendet wird.

10. Verfahren nach einem der Ansprüche 6 bis 9, **dadurch gekennzeichnet, dass** das Stückgutlager (2) zur Versorgung einer Druckmaschine verwendet wird.
